# EUROPÄISCHE PATENTSCHRIFT

(11) **EP 2 721 312 B1**
(45) Veröffentlichungstag und Bekanntmachung des Hinweises auf die Patenterteilung: **09.08.2017**
(21) Anmeldenummer: 12743661.6
(22) Anmeldetag: 06.06.2012
(51) Int. Cl.: F16C 27/06

(54) **LAGERVORRICHTUNG FÜR FÖRDERSCHNECKENWELLEN**
BEARING DEVICE FOR SCREW CONVEYOR SHAFTS
DISPOSITIF DE PALIER POUR ARBRES DE VIS TRANSPORTEUSE

(30) Priorität: 20.06.2011 DE 102011051191
(43) Veröffentlichungstag der Anmeldung: 23.04.2014
(73) Patentinhaber: Wheelabrator Group GmbH, 48629 Metelen (DE)
(72) Erfinder: KAMPEN, Berthold, 48509 Recke (DE)
(74) Vertreter: Tarvenkorn, Oliver
(86) Internationale Anmeldenummer: PCT/DE2012/100173
(87) Internationale Veröffentlichungsnummer: WO 2012/175074

(56) Entgegenhaltungen:
- EP-A1- 1 273 764
- WO-A1-2008/125792
- DE-A1- 3 701 887
- DE-A1- 4 209 320
- DE-A1-102008 037 990
- US-A1- 2008 267 549
- US-B1- 6 536 953

## Beschreibung

Die Erfindung betrifft eine Lagervorrichtung für Förderschneckenwellen, mit wenigstens einer Wellenlagereinheit, und einer in der Wellenlagereinheit geführten Verbindungswelle zur Verbindung mit wenigstens einer Förderschneckenwelle.

Solche Lager-Kupplungs-Einheiten werden eingesetzt, um in Förderanlagen Schneckenwellen für die Förderung von Feststoffen drehbar zu lagern, insbesondere Scheckenwellen für die Förderung von partikelförmigen Strahlmitteln in Oberflächenbehandlungsanlagen. Zwei Schneckenwellen können darüber hinaus an einer solchen Einheit miteinander verbunden werden.

Da die Schneckenwellen bei der Feststoffförderung ungleichmäßig belastet werden und zudem zwischen den Lagerpunkten eine große Länge von 5 bis 6 Metern besitzen, fluchten die Lagerabsätze der Schneckenwellen nicht mit den Achsen der Wellenlager bzw. mit einer Verbindungswelle, die drehbar in der Hängelagervorrichtung gelagert ist und an die die Schneckenwellen stirnseitig angeschlossen werden. Es kann im Betrieb zu Winkelschiefstellungen der Achsen und zu pendelnden Bewegungen kommen, die innerhalb der Wellenlagereinheit ausgeglichen werden müssen. Hierzu sind nach dem Stand der Technik Pendelrollenlager vorgesehen, in denen die Verbindungswelle gelagert ist. In rauen Arbeitsumgebungen mit großer Staubentwicklung dringt jedoch schnell Staub in das Pendelrollenlager ein, so dass dieses schnell verschleißt und ausgetauscht werden muss, was wiederum Stillstandszeiten der Fördereinrichtung nach sich zieht. Eine Einhausung der Wellenlagereinheit als Staubschutz ist nicht möglich, da eben wegen der genannten Achsenschiefstellungen und Pendelbewegungen die Spaltweite zwischen einer runden zentralen Öffnung eines ortsfesten Gehäuses und der Verbindungswelle sich laufend ändern würde.

Aus der DE 37 01 887 A1 ist eine elastische Lagerung bekannt, die insbesondere als Zwischenlager für die Antriebsgelenkwelle von Kraftfahrzeugen dient. Sie besitzt eine starre Außenhülse, eine Innenhülse sowie einen dazwischen angeordneten elastischen Lagerkörper. Der Ausgleich von Winkelschiefstellungen bei gleichzeitiger Staubdichtigkeit ist nicht offenbart.

Die US2008/267549 A1 zeigt eine Lagereinheit für die Antriebswelle in einem Fahrzeug. Ein elastomeres Lagerelement erlaubt Winkelabweichungen der Welle in der Lagerstelle. Jedoch liegt das elastomere Lagerelement völlig ungeschützt außerhalb des Lagergehäuses. Dieses besitzt mit seinen mehrfach gestuften Absätzen zahlreiche Angriffsstellen für Strahlpartikel.

Aufgabe der vorliegenden Erfindung ist es somit, eine Lagervorrichtung für Förderschneckenwellen anzugeben, die auch in rauer Arbeitsumgebung eine hohe Standzeit besitzt.

Diese Aufgabe wird durch eine Lagervorrichtung mit den Merkmalen des Anspruchs 1 gelöst.

Die erfindungsgemäße Lagervorrichtung verlagert den Ausgleich der Achsenschiefstellungen in das elastomere Ringelement. Dadurch kann die eigentliche Wellenlagereinheit genau mit den Lagerabsätzen der Förderschneckenwelle oder der Anschlusseinheiten dafür fluchten und kann über an sich bekannte Wellendichtringe vollständig gegenüber der rotierenden Verbindungswelle abgedichtet werden.

Die Lagerung der Verbindungswelle innerhalb der Wellenlagereinheit kann durch zwei einfache Rillenkugellager erfolgen, da keine axialen Kräfte und auch keine Biegemomente auf die Lager ausgeübt werden. Die Wellenlagereinheit folgt somit als Ganze einer Bewegung der Verbindungswelle, welche durch die seitlich angesetzten Förderschneckenwellen hervorgerufen wird.

Gegenüber den ortsfesten Teilen der Lagervorrichtung sorgt die elastomere Zwischenschicht für einen Ausgleich und baut darüber hinaus Rückstellkräfte auf, so dass automatisch wieder eine fluchtende Stellung mit der konstruktiv vorgesehenen Mittelachse eingenommen wird, wenn alle einseitigen Kräfte und Momente, die über einer der angeschlossenen Förderschneckenwellen eingeleitet werden, aufgehoben sind.

Das elastische Ringelement ist insbesondere aus einer Polyurethan-Vergussmasse gebildet, die im dickflüssigen Zustand zwischen den Innenring des ortsfesten Außengehäuses und einen Außenmantel der Wellenlagereinheit gegossen wird. Hierdurch sind das Außengehäuse und das Innengehäuse stoffschlüssig miteinander verbunden, so dass auch in begrenztem Maße etwaige axial wirkende Zugkräfte aufgenommen werden können.

Die ausgehärtete Vergussmasse besitzt vorzugsweise eine Härte von 50 - 80 Shore-A, insbesondere 60 Shore-A. Die Dicke der elastomeren Schicht beträgt dabei vorzugsweise etwa 10 mm. Mit diesen Eigenschaften können Schiefstellungen der Achsen von bis zu 3° gut kompensiert werden.

Außerdem ist, wie grundsätzlich bekannt, eine staubdichte Abdichtung der rotierenden Welle gegenüber dem Gehäuse der Wellenlagereinheit möglich.

Die genaue Ausbildung der Wellenlagereinheit wird nachfolgend mit weiteren vorteilhaften Ausbildungen anhand eines Ausführungsbeispiels beschrieben, das in den Figuren dargestellt ist. Die Figuren zeigen im Einzelnen:
- Fig. 1: eine erfindungsgemäße Lagervorrichtung in perspektivischer Ansicht;
- Fig. 2: die Lagereinheit in seitlicher Ansicht und
- Fig. 3: die Lagereinheit in seitlicher, geschnittener Ansicht.

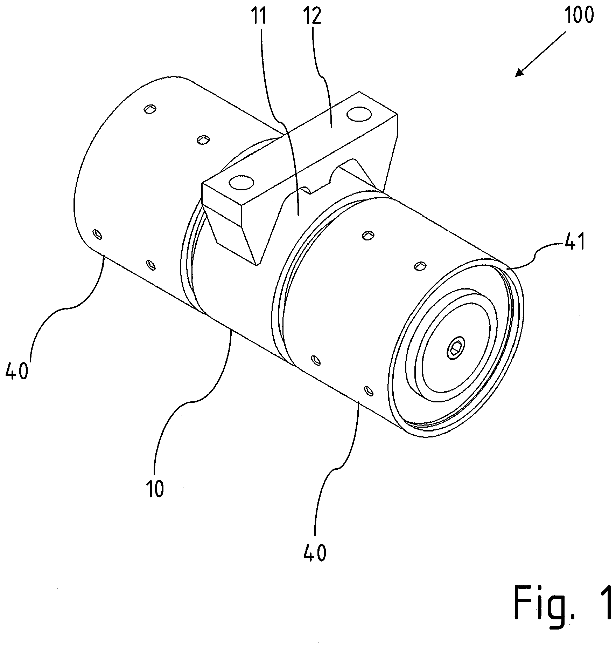

Fig. 1 zeigt eine erfindungsgemäßen Lagervorrichtung 100, die im Wesentlichen drei Abschnitte umfasst: in der Mitte ist eine Basiseinheit 10 angeordnet, an die sich beidseits jeweils eine Anschlusseinheit 40 anschließt.

Die Basiseinheit 10 umfasst ein Außengehäuse 11 mit einem daran angesetztem Trägerelement 12 und eine im Inneren liegende Wellenlagereinheit, die hier nicht sichtbar ist.

Seitlich daneben sind die Anschlusseinheiten 40 vorgesehen, die fest mit den Enden einer innerhalb der Basiseinheit 10 rotierenden Verbindungswelle verbunden sind und die einen direkten Anschluss der Förderschneckenwellen ermöglichen.

Um wenig Angriffsfläche zu bieten, insbesondere für den Fall des bevorzugten Einsatzes in Oberflächenbehandlungseinrichtungen, bei denen Strahlmittel mit großer kinetischer Energie in die Arbeitskammer eingebracht wird, sind das Außengehäuse 11 der Basiseinheit 10 wie auch die äußeren Gehäusemäntel 41 der Anschlusseinheiten 40 jeweils rohrförmig ausgebildet, wobei gleiche Durchmesser vorgesehen sind, um aufragende Absätze, die eine Angriffsfläche für das Strahlmittel bieten könnten, zu vermeiden.

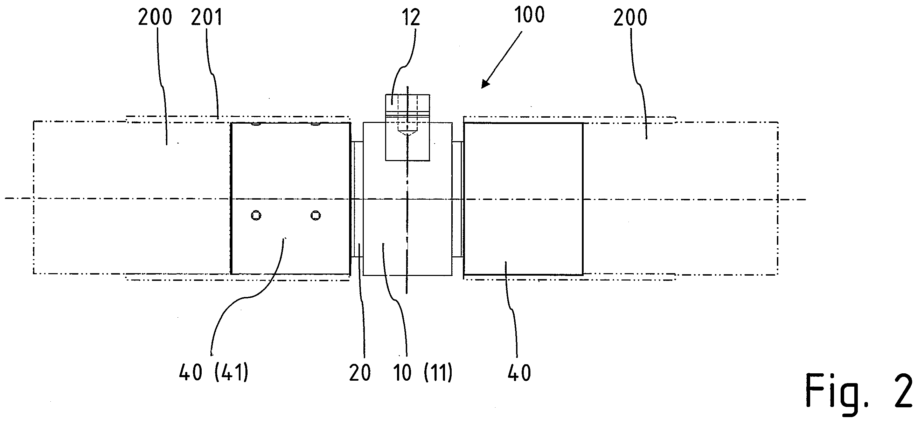

Fig. 2 zeigt die Lagervorrichtung 100 von der Seite her. Zwischen der Basiseinheit 10 in der Mitte und den beiden sich seitlich anschließenden Anschlusseinheiten 40 ist ein schmaler Spalt vorhanden, durch den die innen liegende Wellenlagereinheit 20 erkennbar ist. Die Spaltbreite ist mit mindestens 5 bis 10 mm bevorzugt so groß gewählt, dass eingedrungener Staub oder sonstige eingedrungene Partikel leicht wieder nach unten abfließen können. Mit dem nach oben weisenden Trägerelement 12 ist die erfindungsgemäße Lagervorrichtung 100 insbesondere zur Verwendung als Hängelagervorrichtung vorgesehen.

Seitlich schließen sich im dargestellten Ausführungsbeispiel jeweils die zu lagernden Schneckenwellen 200 an, die durch die strichpunktierten Linien angedeutet sind. Verbindungshülsen 201 werden über die rohrförmigen Gehäusemäntel 41 der Anschlusseinheiten 40 geschoben und dann mit Hilfe der in dem Gehäusemantel 41 eingebrachten Gewindebohrungen drehfest gesichert.

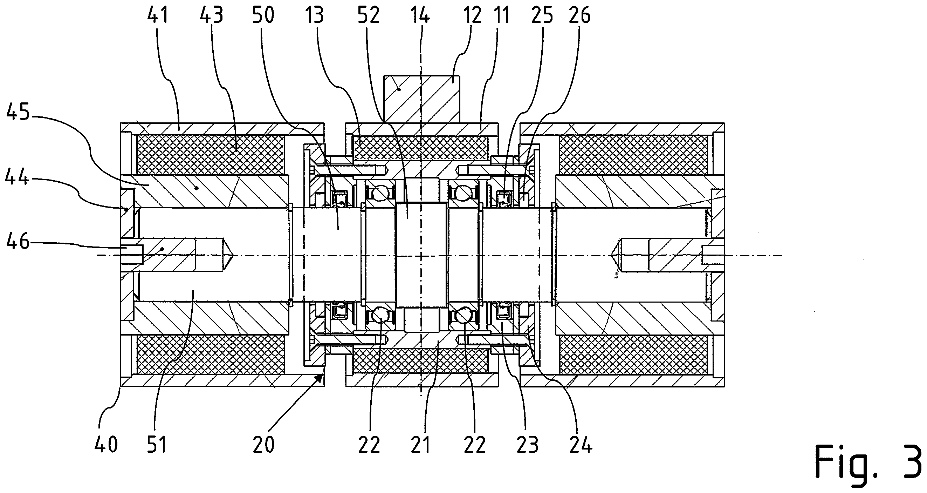

Der erfindungswesentliche Aufbau der Lagervorrichtung 100 ist insbesondere aus der Schnittdarstellung in Fig. 3 erkennbar.

Im Inneren ist eine rotierende Verbindungswelle 50 angeordnet, die zu beiden Seiten Lagerabsätze 51 aufweist, auf welche die Anschlusseinheiten 40 aufgesetzt werden können. In der Mitte ist ein Absatz 52 ausgebildet, an den sich zu beiden Seiten Rillenkugellager 22 anschließen, die jeweils mit einem Sicherungsring axial festgelegt sind. Zur Außenseite hin, also außen vor den Rillenkugellagern 22, ist ein Wellendichtring 25 in einem Zwischenring 23 angeordnet.

Weiter außerhalb davon ist eine zusätzliche Filzdichtung 26 vorgesehen, die über die Oberfläche der Verbindungswelle 50 schleift und die in einer Abdeckringscheibe 24 gelagert ist. Die Abdeckringscheibe 24 und der Zwischenring 23 sind zentriert an einem Gehäuse 21 der Wellenlagereinheit 20 befestigt.

Das Gehäuse 21 der Wellenlagereinheit 20 ist über ein elastomeres Ringelement 13 fest mit dem Außengehäuse 11 der Basiseinheit 10 verbunden, insbesondere vergossen. Somit kann die gesamte Wellenlagereinheit 20 um den in Fig. 3 erkennbaren Schnittpunkt von Mittelachse und Hochachse 14 zu beiden Seiten hin kippen und dadurch Pendelbewegungen der seitlich angeschlossenen Förderschnecken 200 ausgleichen.

Die innere Wellenlagereinheit 20 erstreckt sich axial über das Außengehäuse 11 der Basiseinheit 10 hinaus nach außen, besitzt aber einen kleineren Durchmesser. Die rohrförmigen Gehäusemäntel 41 der äußeren Anschlusseinheiten 40 hingegen besitzen einen größeren Durchmesser und erstrecken sich axial teilweise über die hervorstehenden Bereiche der Wellenlagereinheit 20 hinaus in Richtung der Mittelachse 14. Hierdurch wird eine Art Labyrinthdichtung geschaffen. Von außen in den Spalt zwischen Basis- und Anschlusseinheiten 10, 40 eindringende Partikel müssen erst eine dreifache Umlenkung erfahren, bevor sie in den Ringspalt zwischen der Verbindungswelle 50 und den außen liegenden Abdeckringscheiben 24 eindringen können.

Dahinter werden sie jedoch direkt durch die Filzdichtung 26 abgefangen. Feine Partikel, die durch die Berührungsebene zwischen der Innenseite des Filzrings 26 und der Außenseite der Verbindungswelle 50 gelangen, werden dann an dem Wellendichtring 25 mit seiner flexiblen Dichtlippe endgültig zurückgehalten.

Die Anschlusseinheiten 40 umfassen im dargestellten Ausführungsbeispiel jeweils eine Verbindungsbuchse 45, die direkt auf den endseitigen Lagerabsatz 51 der Verbindungswelle 50 aufgesetzt werden können. Deren axiale Position ist durch einen Sicherungsring begrenzt. Vorne, von der Stirnseite her, ist eine Sicherungsplatte 44 vorgesehen, die mit einer Schraube 46 in einer Gewindebohrung in der Verbindungswelle 50 gesichert wird.

Die Verbindungsbuchse 45 steht mit wenigstens einem weiteren elastomeren Bereich 43 in Kontakt. An dem rohrförmigen Gehäusemantel 41 und der Verbindungsbuchse 45 sind jeweils radiale Rippen angeschweißt, die in Fig. 3 nicht erkennbar sind und zwischen denen elastomere Bereiche 43 vorgesehen sind, die eine direkte Berührung der Rippen verhindern, aber eine Drehmomentübertragung zwischen Verbindungsbuchse 45 und Gehäusemantel 41 ermöglichen. Pendelbewegungen der angeschlossenen Förderschnecken 200 werden also zum Teil bereits durch die elastomeren Bereiche 43 zwischen den ineinander verzahnten Rippen in den Anschlusseinheiten kompensiert. Erst wenn die durch die beiden seitlich angeschlossenen Förderschneckenwellen 200 hervorgerufenen Biegemomente unterschiedlich sind, kommt es zu einer Schiefstellung der Verbindungswelle 50 gegenüber der ortsfesten Hochachse 14, wodurch auch die gesamte innere Wellenlagereinheit 20 gekippt wird. Diese Schiefstellung wird dann über das elastomere Ringelement 13 der Basiseinheit 10 kompensiert.

Die elastomeren Zwischenschichten 13, 43 besitzen jeweils eine etwas kleinere axiale Länge als die sie umgebenden äußeren Gehäusemäntel 11, 41, so dass sie vor direkt anprallendem Strahlmittel weitgehend geschützt sind. Ohnehin wird aufgrund der elastischen Eigenschaften die kinetische Energie anprallender Strahlpartikel weitestgehend kompensiert, so dass es kaum zu einer abrasiven Wirkung kommt. Eine teilweise Abtragung der Stirnseiten der elastomeren Ringelemente 13, 43 beeinträchtigt deren Funktion außerdem nicht. Die Ringelemente 13, 43 ermöglichen also eine verschleißfreie Pendellagerung der Verbindungswelle 50.

## Patentansprüche

1. Lagervorrichtung (100) für Förderschneckenwellen (200),
mit wenigstens einer Wellenlagereinheit (20), die einen Gehäusemantel (21) umfasst, der wenigstens ein Wälzlager (22) zur Lagerung einer rotierbaren Welle aufnimmt,
und mit einer Basiseinheit (10) mit einem Außengehäuse (11), in welchem die Wellenlagereinheit (20) schwenkbeweglich angeordnet ist,
wobei zwischen einem Innenring des Außengehäuses (11) und einer Mantelfläche des Gehäusemantels (21) der Wellenlagereinheit (20) wenigstens ein elastomeres Ringelement (13) angeordnet ist
**dadurch gekennzeichnet,**
- **dass** in der Wellenlagereinheit (20) eine Verbindungswelle (50) gelagert ist,
- **dass** die Enden (51) der Verbindungswelle (50) jeweils in einer Anschlusseinheit (40) aufgenommen sind, welche jeweils mit einer Förderschneckenwelle (200) zu verbinden sind;
- **dass** das Außengehäuse (11) der Basiseinheit (10) und ein äußerer Gehäusemantel (41) der Anschlusseinheit (40) jeweils rohrförmig ausgebildet sind;
- **dass** sich die innere Wellenlagereinheit (20) axial über das Außengehäuse (11) der Basiseinheit (10) hinaus nach außen erstreckt und einen kleineren Durchmesser besitzt als die Basiseinheit (10), und dass der rohrförmige Gehäusemantel (41) der äußeren Anschlusseinheit (40) einen größeren Durchmesser besitzt und sich axial in Richtung der Mittelachse (14) teilweise über die aus der Basiseinheit (10) herausragenden Bereiche der Wellenlagereinheit (20) hinaus erstreckt.

2. Lagervorrichtung (100) nach Anspruch 1, **dadurch gekennzeichnet, dass** die Wellenlagereinheit (20) zwei Rillenkugellager (22) umfasst, in denen die Verbindungswelle (50) drehbar gelagert ist.

3. Lagervorrichtung (100) nach Anspruch 1 oder 2, **dadurch gekennzeichnet, dass** das Außengehäuse (11) einen außen angeschlossenen Lagerkonsolenträger (12) aufweist.

4. Lagervorrichtung (100) nach wenigstens einem der Ansprüche 1 bis 3, **dadurch gekennzeichnet, dass** sich stirnseitig Deckscheiben (24) an den Gehäusemantel (21) der Wellenlagereinheit anschließen, wobei wenigstens eine der Deckscheiben (21) ringförmig mit einer zentralen Bohrung zur Durchführung der Verbindungswelle (50) ausgebildet ist und wobei in einem Ringspalt zwischen der Deckscheibe (21) und der Verbindungswelle (50) wenigstens ein Dichtring (25, 26) angeordnet ist.

5. Lagervorrichtung (100) nach Anspruch 4, **dadurch gekennzeichnet, dass** der Dichtring ein Wellendichtring (25) ist.

6. Lagervorrichtung (100) nach Anspruch 4, **dadurch gekennzeichnet, dass** der Dichtring eine Filzdichtung (26) oder eine Bürstendichtung ist.

7. Lagervorrichtung (100) nach den Ansprüchen 4 bis 6, **dadurch gekennzeichnet, dass** die Filzdichtung (26) und/oder die Bürstendichtung außen vor dem Wellendichtring (25) angeordnet ist.

8. Lagervorrichtung (100) nach wenigstens einem der Ansprüche 1 bis 7, **dadurch gekennzeichnet, dass** bei der Basiseinheit (10) der Gehäusemantel (21) und das Außengehäuse (11) über das Ringelement (13) stoffschlüssig miteinander verbunden sind.

9. Lagervorrichtung (100) nach wenigstens einem der Ansprüche 1 bis 8, **dadurch gekennzeichnet, dass** die Anschlusseinheit (40) eine Zwischenbuchse (45) zur Aufnahme eines Endes (51) der Verbindungswelle (50) aufweist, wobei zwischen dem Gehäusemantel (41) und der Zwischenbuchse (45) ein elastomeres Ringelement (43) angeordnet ist.

10. Lagervorrichtung (100) nach Anspruch 9, **dadurch gekennzeichnet, dass** bei der Anschlusseinheit (40) die Zwischenbuchse (45) und der Gehäusemantel (41) über das Ringelement (43) stoffschlüssig miteinander verbunden sind.

11. Lagervorrichtung (100) nach einem der Ansprüche 8 bis 10, **dadurch gekennzeichnet, dass** das Ringelement (13, 43) aus einer Polyurethan-Vergussmasse gebildet ist.

12. Lagervorrichtung (100) nach wenigstens einem der vorhergehenden Ansprüche, **dadurch gekennzeichnet, dass** die Wellenlagereinheit (20) um den Schnittpunkt von Mittelachse und Hochachse (14) zu beiden Seiten hin kippen kann.

13. Lagervorrichtung (100) nach wenigstens einem der vorhergehenden Ansprüche, **dadurch gekennzeichnet, dass** das Außengehäuse (11) der Basiseinheit (10) und der äußere Gehäusemantel (41) der Anschlusseinheit (40) im wesentlichen gleiche Durchmesser besitzen.

## Claims

1. Bearing apparatus (100) for conveying worm shafts (200) ,
having at least one shaft bearing unit (20) which comprises a housing shell (21) which receives at least one anti-friction bearing (22) for mounting a rotatable shaft,
and having a base unit (10) with an outer housing (11), in which the shaft bearing unit (20) is arranged in a pivotably movable manner,
at least one elastomeric ring element (13) being arranged between an inner ring of the outer housing (11) and a circumferential face of the housing shell (21) of the shaft bearing unit (20),
**characterized**
- **in that** a connecting shaft (50) is mounted in the shaft bearing unit (20),
- **in that** the ends (51) of the connecting shaft (50) are received in each case in a connector unit (40), which connector units (40) are to be connected in each case to a conveying worm shaft (200) ;
- **in that** the outer housing (11) of the base unit (10) and an outer housing shell (41) of the connector unit (40) are in each case of tubular configuration;
- **in that** the inner shaft bearing unit (20) extends axially outwards beyond the outer housing (11) of the base unit (10) and has a smaller diameter than the base unit (10), and in that the tubular housing shell (41) of the outer connector unit (40) has a greater diameter and extends axially in the direction of the centre axis (14) partially beyond the regions of the shaft bearing unit (20) which protrude out of the base unit (10).

2. Bearing apparatus (100) according to Claim 1, **characterized in that** the shaft bearing unit (20) comprises two groove ball bearings (22), in which the connecting shaft (50) is mounted rotatably.

3. Bearing apparatus (100) according to Claim 1 or 2, **characterized in that** the outer housing (11) has a bearing bracket carrier (12) which is connected on the outside.

4. Bearing apparatus (100) according to at least one of Claims 1 to 3, **characterized in that** covering discs (24) adjoin the housing shell (21) of the shaft bearing unit on the end side, at least one of the covering discs (21) being of annular configuration with a central bore for guiding through the connecting shaft (50), and at least one sealing ring (25, 26) being arranged in an annular gap between the covering discs (21) and the connecting shaft (50).

5. Bearing apparatus (100) according to Claim 4, **characterized in that** the sealing ring is a shaft sealing ring (25).

6. Bearing apparatus (100) according to Claim 4, **characterized in that** the sealing ring is a felt seal (26) or a brush seal.

7. Bearing apparatus (100) according to Claims 4 to 6, **characterized in that** the felt seal (26) and/or the brush seal are/is arranged on the outside in front of the shaft sealing ring (25).

8. Bearing apparatus (100) according to at least one of Claims 1 to 7, **characterized in that**, in the case of the base unit (10), the housing shell (21) and the outer housing (11) are connected to one another in an integrally joined manner via the ring element (13).

9. Bearing apparatus (100) according to at least one of Claims 1 to 8, **characterized in that** the connector unit (40) has an intermediate bush (45) for receiving one end (51) of the connecting shaft (50), an elastomeric ring element (43) being arranged between the housing shell (41) and the intermediate bush (45).

10. Bearing apparatus (100) according to Claim 9, **characterized in that**, in the case of the connector unit (40), the intermediate bush (45) and the housing shell (41) are connected to one another in an integrally joined manner via the ring element (43).

11. Bearing apparatus (100) according to one of Claims 8 to 10, **characterized in that** the ring element (13, 43) is formed from a polyurethane casting compound.

12. Bearing apparatus (100) according to at least one of the preceding claims, **characterized in that** the shaft bearing unit (20) can tilt towards both sides about the point of intersection of the centre axis and the vertical axis (14).

13. Bearing apparatus (100) according to at least one of the preceding claims, **characterized in that** the outer housing (11) of the base unit (10) and the outer housing shell (41) of the connector unit (40) have substantially identical diameters.

## Revendications

1. Dispositif de palier (100) pour arbres de vis transporteuse (200),
avec au moins une unité de palier d'arbre (20), qui comprend une enveloppe de boîtier (21), qui contient au moins un palier à roulement (22) pour supporter un arbre rotatif,
et avec une unité de base (10) avec un boîtier extérieur (11), dans lequel l'unité de palier d'arbre (20) est disposée avec un mouvement pivotant,
dans lequel au moins un élément annulaire élastomère (13) est disposé entre une bague intérieure du boîtier extérieur (11) et une face latérale de l'enveloppe de boîtier (21) de l'unité de palier d'arbre (20), **caractérisé en ce que**
- un arbre de liaison (50) est monté dans l'unité de palier d'arbre (20),
- les extrémités (51) de l'arbre de liaison (50) sont logées respectivement dans des unités de raccordement (40), qui doivent être respectivement reliées à un arbre de vis transporteuse (200);
- le boîtier extérieur (11) de l'unité de base (10) et une enveloppe de boîtier extérieure (41) de l'unité de raccordement (40) sont respectivement de forme tubulaire;
- l'unité de palier d'arbre intérieure (20) s'étend axialement vers l'extérieur au-delà du boîtier extérieur (11) de l'unité de base (10) et présente un plus petit diamètre que l'unité de base (10), et **en ce que** l'enveloppe de boîtier tubulaire (41) de l'unité de raccordement extérieure (40) présente un plus grand diamètre et s'étend axialement en direction de l'axe central (14) en partie au-delà des régions de l'unité de palier d'arbre (20) sortant hors de l'unité de base (10).

2. Dispositif de palier (100) selon la revendication 1, **caractérisé en ce que** l'unité de palier d'arbre (20) comprend deux roulements à billes rainurés (22), dans lesquels l'arbre de liaison (50) est supporté de façon rotative.

3. Dispositif de palier (100) selon la revendication 1 ou 2, **caractérisé en ce que** le boîtier extérieur (11) présente une chaise de palier (12) assemblée extérieurement.

4. Dispositif de palier (100) selon au moins une des revendications 1 à 3, **caractérisé en ce que** des disques de recouvrement (24) se raccordent frontalement à l'enveloppe de boîtier (21) de l'unité de palier d'arbre, dans lequel au moins un des disques de recouvrement (21) est réalisé sous forme annulaire avec un alésage central pour le passage de l'arbre de liaison (50) et dans lequel au moins un joint d'étanchéité (25, 26) est disposé dans une fente annulaire entre le disque de recouvrement (21) et l'arbre de liaison (50).

5. Dispositif de palier (100) selon la revendication 4, **caractérisé en ce que** le joint d'étanchéité est un joint d'étanchéité d'arbre (25).

6. Dispositif de palier (100) selon la revendication 4, **caractérisé en ce que** le joint d'étanchéité est un joint de feutre (26) ou un joint à brosse.

7. Dispositif de palier (100) selon les revendications 4 à 6, **caractérisé en ce que** le joint de feutre (26) et/ou le joint à brosse est disposé extérieurement avant le joint d'arbre (25).

8. Dispositif de palier (100) selon au moins une des revendications 1 à 7, **caractérisé en ce que** dans l'unité de base (10) l'enveloppe de boîtier (21) et le boîtier extérieur (11) sont reliés matériellement l'un à l'autre au moyen de l'élément annulaire (13).

9. Dispositif de palier (100) selon au moins une des revendications 1 à 8, **caractérisé en ce que** l'unité de raccordement (40) présente un coussinet intermédiaire (45) destiné à recevoir une extrémité (51) de l'arbre de liaison (50), dans lequel un élément annulaire élastomère (43) est disposé entre l'enveloppe de boîtier (41) et le coussinet intermédiaire (45).

10. Dispositif de palier (100) selon la revendication 9, **caractérisé en ce que** dans l'unité de raccordement (40) le coussinet intermédiaire (45) et l'enveloppe de boîtier (41) sont reliés matériellement l'un à l'autre au moyen de l'élément annulaire (43).

11. Dispositif de palier (100) selon l'une quelconque des revendications 8 à 10, **caractérisé en ce que** l'élément annulaire (13, 43) est formé d'une masse moulée en polyuréthane.

12. Dispositif de palier (100) selon au moins une des revendications précédentes, **caractérisé en ce que** l'unité de palier d'arbre (20) peut basculer de part et d'autre autour du point d'intersection de l'axe central et de l'axe vertical (14).

13. Dispositif de palier (100) selon au moins une des revendications précédentes, **caractérisé en ce que** le boîtier extérieur (11) de l'unité de base (10) et l'enveloppe de boîtier extérieure (41) de l'unité de raccordement (40) possèdent essentiellement le même diamètre.
